# EUROPÄISCHE PATENTANMELDUNG

(11) **EP 1 070 895 A1**
(43) Veröffentlichungstag der Anmeldung: **24.01.2001**
(21) Anmeldenummer: 00810616.3
(22) Anmeldetag: 13.07.2000
(51) Int. Cl.: F16L 5/04

(54) **Brandschutzmaterial**

(30) Priorität: 20.07.1999 CH 132899
(71) Anmelder: GEBERIT TECHNIK AG, 8645 Jona (CH)
(72) Erfinder: Häsler, Heinz, 8645 Jona (CH)
(74) Vertreter: Groner, Manfred

(57) **Zusammenfassung**

Die Rohrmanschette weist ein intumeszierendes Blähmaterial (5) auf, das innenseitig der Manschette (10) angeordnet ist und im Brandfall die Rohrleitung (1) verschliesst. In das Blähmaterial (5) ist ein Wärmebeschleuniger oder Wärmeleiter (6) eingebracht. Der Wärmeleiter besitzt eine wesentlich höhere Wärmeleitfähigkeit als das Blähmaterial (5). Durch den Wärmebeschleuniger oder Wärmeleiter (6) wird im Brandfall schneller als bisher Wärme dem Blähmaterial (5) zugeführt. Die Brandmanschette reagiert im Brandfall schneller und verschliesst rechtzeitig die Rohrleitung (1).

## Beschreibung

Die Erfindung betrifft eine Rohrmanschette zum Abschotten von Rohren, die durch Wände oder Decken hindurchführen, mit einem intumeszierenden Blähmaterial, das innenseitig der Manschette angeordnet ist und im Brandfall die Rohrleitung verschliesst. Rohrmanschetten dieser Art sind im Stand der Technik seit langem in verschiedenen Ausführungen bekannt. Diese Rohrmanschetten sollen einen Durchbrand von einem Stockwerk zu einem anderen eines Gebäudes wirksam verhindern. Im Brandfall dehnt sich das intumeszierende Blähmaterial aus und durch den radialen Druck nach innen wird das Rohr radial zusammengedrückt und damit der Durchgang verschlossen. Dadurch ist verhindert, dass der Brand durch die Rohrleitung von einem Stockwerk in ein anderes gelangen kann.

Es wurde nun beobachtet, dass besonders beim Einbau einer Rohrmanschette in Betondecken eine schlechtere Wärmeleitung zu dem intumeszierenden Brandschutzmaterial stattfindet. Das Brandschutzmaterial bzw. das Blähmaterial schäumt dann zu langsam auf und ein Verschluss der Rohrleitung erfolgt nicht frühzeitig genug. Ein Durchbrand lässt sich in diesem Fall nicht sicher und vollständig verhindern.

Aus der EP 0 711 945 B1 ist eine Rohrmanschette der genannten Art bekannt geworden, die in einen Durchbruch einzubauen ist und die auf ihrer Aussenseite ein sich unter Hitzeeinwirkung auflösendes- und/oder gut wärmeleitfähiges Material aufweist. Im Brandfall soll die entstehende Hitze in dieses äussere Material von ausserhalb der Wand oder Decke her nach und nach eindringen und die Manschette und damit auch das auf der Innenseite der Manschette vorhandene Blähmaterial erhitzen. Im Brandfall wird somit durch die Hitze die äussere Materialschicht beseitigt und damit soll der Zugang der Wärme zum Blähmaterial erleichtert werden. Die Anordnung des sich auflösenden und/oder extrem wärmeleitfähigen Materials auf der Aussenseite der Manschette erfordert einen entsprechend weiten Durchbruch in der Wandung und es besteht weiterhin das Bedürfnis nach einer noch höheren Reaktionszeit.

Der Erfindung liegt die Aufgabe zugrunde, eine Rohrmanschette der genannten Art zu schaffen, die einfacher in der Herstellung und zum Montieren ist und die sich durch einen noch schnelleren und sicheren Verschluss im Brandfall auszeichnet.

Die Aufgabe ist bei einer gattungsgemässen Rohrmanschette dadurch gelöst, dass in das Blähmaterial ein Wärmebeschleuniger oder ein Wärmeleiter eingebracht ist, welcher Wärmeleiter eine wesentlich höhere Wärmeleitfähigkeit als das Blähmaterial aufweist. Gemäss der Erfindung sind somit der Wärmebeschleuniger bzw. der Wärmeleiter direkt in das Blähmaterial eingebracht. Die Wärme wird damit schneller in das Blähmaterial geleitet oder im Fall eines Wärmebeschleunigers wird die Wärme im Blähmaterial erzeugt. Im Unterschied zum Stand der Technik dringt die Wärme nicht von der Aussenseite in die Rohrmarischette ein, sondern gelangt direkt ins Innere des Blähmaterials.

Ist nach einer bevorzugten Weiterbildung der Erfindung der Wärmeleiter eine mittlere Schicht, so besteht eine sehr grosse Kontaktfläche vom Wärmeleiter zum Blähmaterial. Zudem kann eine solche Schicht sich über die ganze Länge der Rohrmanschette erstrecken und vorzugsweise erstreckt sich eine solche Schicht bis zu einer Stirnseite der Rohrmanschette, welche den abzuschottenden Raum zugewandt ist. Im Brandfall gelangt damit Wärme direkt zu einer solchen Schicht und verteilt sich auf kurzem Weg sehr schnell über eine grosse Kontaktfläche in das Blähmaterial.

Der Wärmebeschleuniger weist gemäss seiner Weiterbildung der Erfindung beispielsweise Magnesium auf oder enthält Magnesium. Solche Materiale und Stoffe sind an sich bekannt. Bei einer bestimmten Temperatur läuft eine chemische exotherme Reaktion ab, welche Hitze erzeugt. Im vorliegenden Fall bewirkt eine solche Hitze oder Wärmeentwicklung eine Dehnung des Blähmaterials und damit eine Verschluss der Rohrleitung.

Der Wärmeleiter ist gemäss einer Weiterbildung der Erfindung aus Metall, einer Metallegierung und insbesondere einer Aluminiumoder Kupferlegierung hergestellt. Vorzugsweise ist der Wärmeleiter eine Schicht, die sandwichartig mit dem Blähmaterial zusammengelegt ist. Das Blähmaterial und der Wärmeleiter bzw. der Wärmebeschleuniger können jedoch auch andere Formen aufweisen, beispielsweise körnig sein.

Das Brandschutzmaterial und der Wärmebeschleuniger bzw. der Wärmeleiter können in ein Gehäuse eingesetzt sein. Das Gehäuse besteht beispielsweise aus Blech. Nach einer bevorzugten Weiterbildung der Erfindung sind das Blähmaterial und der Wärmebeschleuniger bzw. der Wärmeleiter in einen Beutel, insbesondere einen Foliebeutel eingesetzt. Der Beutel kann ein flacher streifenförmiger und rechteckiger Beutel sein. Dieser wird beim Montieren um das Rohr herum gelegt und erhält damit eine offene zylindrische Form. Der Beutel und sein Inhalt sind somit vorzugsweise biegbar.

Ausführungsbeispiele der erfindungsgemässen Manschette werden nachfolgend anhand der Zeichnung näher erläutert. Es zeigen:
- Figur 1: eine in einem Wanddurchbruch montierte erfindungsgemässse Manschette,
- Figur 2: ein Schnitt durch eine Manschette gemäss einer Variante,
- Figur 3: ein Teilschnitt durch eine erfindungsgemässe Rohrmanschette gemäss einer weiteren Variante und
- Figur 4: ein Schnitt durch eine Manschette gemäss einer vierten Variante, und
- Figur 5 und 6: eine weitere Ansicht gemäss Figur 1.

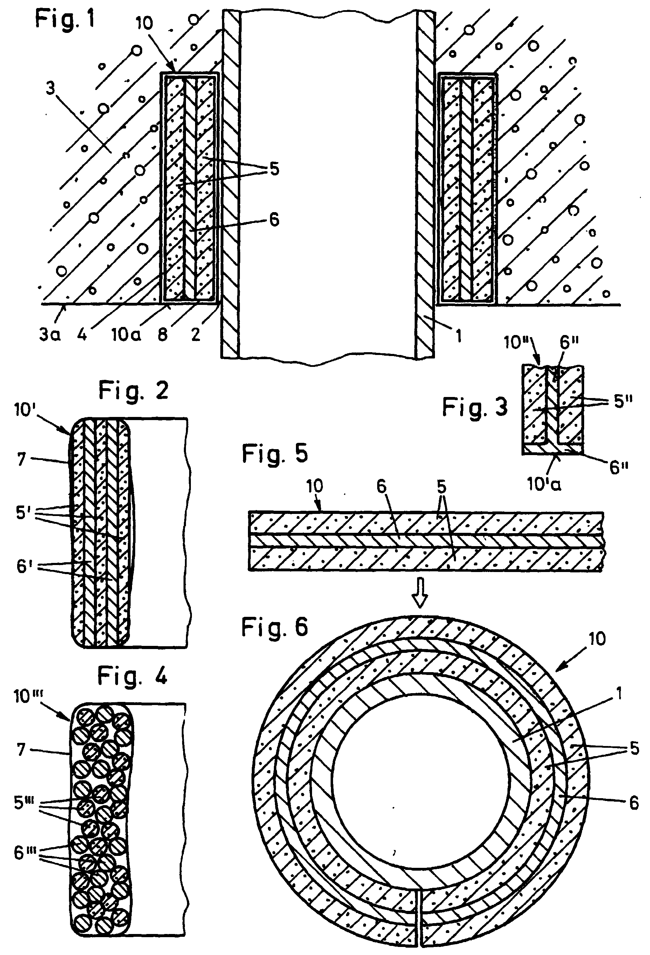

Die Figur 1 zeigt ein Kunststoffrohr 1 einer Leitung, beispielsweise einer Wasserleitung, die durch einen Durchbruch 2 einer Decke oder einer Gebäudewandung führt. Im Fall einer Decke verläuft das Rohr 1 somit vertikal. Damit sich ein Brand im Raum unterhalb der Decke 3 nicht in den darüberliegenden Raum durch das Kunststoffrohr 1 ausbreiten kann, ist in die Decke 3 eine Rohrmanschette 10 eingebaut und wie ersichtlich ist eine Stirnseite 10a der Rohrmanschette 10 im wesentlichen bündig, mit einer Seite 3a der Wandung bzw. Decke 3.

Die Rohrmanschette 10 ist sandwichartig aus Streifen aufgebaut, wobei zwei äussere Streifen aus einem Blähmaterial 5 und ein mittlerer Streifen aus einem Wärmebeschleuniger oder aus einem sehr wärmeleitfähigen Material 6 hergestellt sind. Die Materialien 5 und 6 sind in einem Gehäuse 8 untergebracht. Nach einer Weiterbildung der Erfindung wird dieses Gehäuse 8 durch einen Folienbeutel 7 gebildet.

Ist das Material 6 ein Wärmebeschleuniger, so kann dieser beispielsweise Magnesium enthalten. Vorzugsweise besteht der Wärmebeschleuniger aus einem Metallpulver, insbesondere Magnesium oder Aluminium und einem Oxidationsmittel, insbesondere Schwefel- oder Sauerstoffspender, bei dem sich feste Oxidationsprodukte bilden. Bei einer Hitzeeinwirkung an der Stirnseite 10a verbrennt das Magnesium mit einer starken exothermen Reaktion, sodass innerhalb des Materials 5 durch diese Reaktion Wärme entsteht. Diese Wärme wird sehr schnell in das Material 5 eingeleitet und dieses bläht sich stark auf. Das Rohr 1 wird dadurch radial zusammengedrückt und damit wird der Durchgang 2 verschlossen. Ist das Material 6 wie ersichtlich streifenförmig und erstreckt es sich achsial sowie in Umfangsrichtung über den gesamten Bereich der Manschette, so kann sich die Wärme sehr schnell im gesamten Bereich des Materials 5 verbreiten und damit eine sehr gleichmässige und schnelle Blähwirkung erzeugen.

Das Material 6 kann wie erwähnt auch ein Wärmeleiter sein, der insbesondere ein Metall, beispielsweise eine Metallegierung oder insbesondere eine Aluminiumlegierung ist. Solche Metalle oder Metallegierungen weisen eine hohe Leitfähigkeit auf. Wesentlich ist auch hier, dass das Material 6 sich im Innern des Materials 5 befindet und an der Stirnseite 10a zur Wärmeaufnahme aus dem Brand vorhanden ist. Im Brandfall wird somit die Wärme sehr schnell an der Stirnfläche 10a in das Material 6 eingeleitet und verbreitet sich in diesem über den gesamten Bereich der Rohrmanschette 10. Durch die Wärmeeinwirkung wird das Material 5 aufgebläht und verschliesst den Durchgang 2. Das Material 6 ist auch im Fall eines Wärmeleiters streifenförmig und mit dem streifenförmigen Material 5 zusammengelegt. Das Material 6 kann lose sein oder mit dem streifenförmigen Material 5 verbunden bzw. verklebt sein. Die Materialien 6 und 5 sind vorzugsweise biegbar. Die gemäss Figur 5 plattenförmige Rohrmanschette 10 kann beim Montieren um das Rohr 1 herumgelegt werden und umgreift dann das Rohr 1 mit einer offenen zylinderförmigen Form, wie die Figur 6 zeigt.

Bei der Ausführung gemäss Figur 2 sind zwei Schichten mit Material 6' sowie drei Schichten mit Material 5' vorgesehen. Die Materialien 5' und 6' sind in einer Folie 7 luftdicht eingepackt. Die Rohrmanschette 10' bildet ebenfalls vor dem Montieren eine biegbare ebene Platte, die in der Figur 6 gezeigte Form gebogen werden kann.

Bei der Rohrmanschette 10'' gemäss Figur 3 ist das Material 6'' so ausgebildet, das es an der Stirnseite 10'a einen erweiterten oder verbreiteten Bereich 6''a aufweist. Damit wird erreicht, dass die Wärme im Fall eines Brandes an der Stirnseite 10'a infolge der vergrösserten Fläche noch schneller in das Blähmaterial 5'' eindringt.

Bei der Ausführung gemäss Figur 4 ist körniges Material 6''' vorgesehen, das den ebenfalls körnigen Blähmaterial 5''' beigemengt oder beigemischt ist. Auch hier wird erreicht, dass sich die Wärme gleichmässig und sehr schnell über den ganzen Bereich der Rohrmanschette 10''' verbreitet. Das Material 6''' kann hier wahlweise ein Wärmebeschleuniger oder ein Wärmeleiter sein. Im ersten Fall ist diesem Material beispielsweise Magnesium beigemischt. Im anderen Fall ist der Wärmeleiter aus einem gut wärmeleitfähigen Metall- oder einer Metallegierung hergestellt.

## Patentansprüche

1. Rohrmanschette zum Abschotten von Rohren (1), die durch Wände oder Decken (3) hindurchführen, mit einem intumeszierenden Blähmaterial (5), das innenseitig der Manschette (10) angeordnet ist und im Brandfall die Rohrleitung (1) verschliesst, dadurch gekennzeichnet, dass in das Blähmaterial (5) ein Wärmebeschleuniger oder Wärmeleiter (6) eingebracht ist, welcher Wärmeleiter eine wesentlich höhere Wärmeleitfähigkeit als das Blähmaterial (5) aufweist.

2. Rohrmarischette nach Anspruch 1, dadurch gekennzeichnet, dass der Wärmebeschleuniger (5) durch ein Ansteigen der Temperatur zu einer exothermen Reaktion gebracht wird.

3. Rohrmanschette nach Anspruch 2, dadurch gekennzeichnet, dass der Wärmebeschleuniger (5) schichtförmig angeordnet ist.

4. Rohrmanschette nach Anspruch 2 oder 3, dadurch gekennzeichnet, dass der Wärmebeschleuniger aus Metallpulver, insbesondere Magnesium oder Aluminium und einem Oxidationsmittel, insbesondere Schwefel- oder Sauerstoffspender, bei dem sich feste Oxidationsprodukte bilden, besteht.

5. Rohrmanschette nach Anspruch 1, dadurch gekennzeichnet, dass der Wärmeleiter (6) wenigstens eine Schicht bildet, die sich im wesentlichen bis zu einer Stirnseite (10a) der Manschette (10) erstreckt.

6. Rohrmanschetten nach Anspruch 5, dadurch gekennzeichnet, dass die Schicht eine Zwischenschicht insbesondere eine mittlere Schicht zwischen intumeszierenden Blähmaterialschichten (5) ist.

7. Rohrmanschette nach Anspruch 1, dadurch gekennzeichnet, dass der Wärmeleiter (6) eine körnige Struktur aufweist und dem vorzugsweise ebenfalls körnigen Blähmaterial (5) beigemischt ist (Figur 4).

8. Rohrmanschette nach einem der Ansprüche 5 bis 7, dadurch gekennzeichnet, dass der Wärmeleiter (6) aus Metall, einer Metallegierung und insbesondere aus einer Aluminiu- oder Kupferlegierung hergestellt ist.

9. Rohrmanschette nach einem der Ansprüche 1 bis 8, dadurch gekennzeichnet, dass das Blähmaterial (5) und der Wärmebeschleuniger bzw. der Wärmeleiter (6) in ein Gehäuse (8) eingesetzt sind.

10. Rohrmanschette nach Anspruch 9, dadurch gekennzeichnet, dass das Gehäuse durch einen Beutel (7) insbesondere einen Folienbeutel gebildet ist.
